# EUROPÄISCHE PATENTSCHRIFT

(11) **EP 2 147 494 B1**
(45) Veröffentlichungstag und Bekanntmachung des Hinweises auf die Patenterteilung: **11.11.2015**
(21) Anmeldenummer: 08736202.6
(22) Anmeldetag: 14.04.2008
(51) Int. Cl.: H02J 9/00

(54) **SELBSTAUFHALTENDES ELEKTROGERÄT**
SELF-STOPPING ELECTRICAL APPLIANCE
APPAREIL ÉLECTRIQUE À ARRÊT AUTOMATIQUE

(30) Priorität: 04.05.2007 DE 102007021066
(43) Veröffentlichungstag der Anmeldung: 27.01.2010
(73) Patentinhaber: BSH Hausgeräte GmbH, 81739 München (DE)
(72) Erfinder: FEDERMANN, Marc, 75447 Sternenfels (DE); GRAW, Martin, 75203 Königsbach-Stein (DE); UEBELE, Volkmar, 61231 Bad Nauheim (DE)
(74) Vertreter: Lang, Michael
(86) Internationale Anmeldenummer: PCT/EP2008/054504
(87) Internationale Veröffentlichungsnummer: WO 2008/135343

(56) Entgegenhaltungen:
- WO-A-01/05132
- WO-A-95/10875
- US-A1- 2002 190 797
- US-A1- 2007 013 234

## Beschreibung

Die Erfindung betrifft ein Elektrogerät, insbesondere ein Haushaltsgerät, mit einer Beschaltung und zumindest einem an einem Spannungsversorgungsnetz liegenden Netzteil zur Versorgung von zu steuernden Funktionseinheiten des Elektrogerätes und der Beschaltung, und mit einem Schalter, der das Netzteil des Elektrogerätes im Ruhezustand primärseitig vom Spannungsversorgungsnetz trennt, wobei die Beschaltung dazu vorgesehen ist, den Schalter zu betätigen.

DE 101 48 644 A1 offenbart eine elektrische Schaltung zum Dimmen der beiden Halbwellen einer Wechselspannung mit einer Gleichrichtervollbrücke, welche mit ihren Wechselstromeingängen über einen in Reihe liegenden induktiven Verbraucher mit einer Wechselspannungsquelle verbunden ist, und in deren Diagonale der Gleichstromausgänge ein Feldeffekttransistor geschaltet ist, bei dem die zwischen Gate und Source angelegte Steuerspannung von einem synchron mit der Wechselspannung betriebenen Optokoppler gebildet ist.

DE 195 376 00 A1 und DE 196 52 472 A1 offenbaren eine elektronische Schaltung zur Energieeinsparung bei Wechselspannungstransformatoren, bei der ein primärseitiger elektronischer Schalter, z. B. ein Diac, einen primärseitigen Stromkreis eines Transformators unterbricht oder wieder schließt (sog. "Horstmann-Schaltung").

DE 19932 453 A1 und WO 01/05132 A1 zeigen ein Elektrogerät mit Netzteil, Transformatornetzteil sowie Steuerkarte für ein Elektrogerät. Offenbar wird dazu ein Elektrogerät mit einer Steuereinheit und zumindest einem an einem Spannungsversorgungsnetz liegenden und über einen Schalter schaltbaren Netzteil zur Versorgung von zu steuernden Funktionseinheiten und der Steuereinheit, die über Leitungen an ein geräteexternes Datennetz anschließbar ist, über das Steuersignale, insbesondere ein Rufsignal, an die Steuereinheit gesendet werden, um eine Datenübertragung vom oder zum Elektrogerät zu starten. Um im Standby-Betrieb des Elektrogerätes den Energieverbrauch 0 zu realisieren, trennt der Schalter das Netzteil des Elektrogerätes im Ruhezustand vom Spannungsversorgungsnetz und schließt das Rufsignal mit seiner Energie den elektrischen Schalter. Diese Dokumente zeigen somit eine durch eine externe Datenleitung geschaltete Horstmann-Schaltung.

Es ist die Aufgabe der vorliegenden Erfindung, eine Möglichkeit zur Reduzierung eines Energieverbrauchs eines Elektrogeräts, insbesondere Haushaltsgeräts, und einer entsprechenden Beschaltung im Ruhebetrieb ('Standby') zu schaffen, das bzw. die nicht festfährt.

Diese Aufgabe wird durch ein Elektrogerät nach Anspruch 1 gelöst.

Das Elektrogerät, insbesondere ein Haushaltsgerät, weist eine Beschaltung und zumindest ein an einem Spannungsversorgungsnetz liegendes Netzteil zur Versorgung von zu steuernden Funktionseinheiten des Elektrogerätes und der Beschaltung auf. Dabei ist ein Schalter dazu vorgesehen, das Netzteil des Elektrogerätes im Ruhezustand primärseitig vom Spannungsversorgungsnetz zu trennen. Der Schalter wird durch die Beschaltung betätigt.

Ferner weist das Elektrogerät einen Energiespeicher, z. B. einen Akkumulator, auf, welcher mit seiner Energie den elektrischen Schalter im Ruhezustand aufhält. Der Energiespeicher ist vorzugsweise sekundärseitig zum Netzteil angeordnet und wird von diesem gespeist bzw. aufgeladen.

Die (Hardware-)Beschaltung kann jedes Element sein, das in der Lage ist, den Schalter mit der Energie des Energiespeichers offenzuhalten. Vorzugsweise ist dies zur Vermeidung zusätzlicher Komponenten diejenige Steuereinheit, welche auch die Funktionseinheiten des Elektrogeräts steuert, z. B. ein Mikrocontroller. Zur weiteren Stromeinsparung kann die Beschaltung aber auch eine zur Schaltung des Schalters speziell vorgesehene Beschaltung, wie beispielsweise ein ASIC oder anderer Logikbaustein, sein oder eine gedruckte Schaltung, so dass im Standbybetrieb der Mikrokontroller ausgeschaltet sein kann. Damit der Stromverbrauch der Beschaltung im Ruhezustand gesenkt wird, wird die Beschaltung bzw. Teile davon, z. B. ein Mikrocontroller, im Ruhezustand vorzugsweise in einen Stromsparmodus versetzt, z. B. einen sog. SLEEP-Modus.

Dadurch, dass dann, wenn der Energiespeicher sich entleert hat oder einen vorbestimmten Ladegrad unterschritten hat, der Primärkreis zwangsweise und ohne weiteres Zutun geschlossen wird und damit auch der Sekundarkreis wieder mit Strom versorgt wird, kann das Elektrogerät nicht festfahren oder sich 'aufhängen'. Es ist immer reaktivierbar.

Vorzugsweise überwacht die Beschaltung einen Betriebszustand des Energiespeichers und betätigt bei Erreichen eines vorbestimmten Versorgungsschwellwerts, z. B. einem Ausgabespannungspegel des Energiespeichers, den Schalter so, dass der Schalter das Netzteil des Elektrogerätes primärseitig mit dem Spannungsversorgungsnetz verbindet. Dadurch liegt sekundärseitig wieder eine zum Speisen bzw. Wiederaufladen des Energiespeichers verwendbare Spannung an.

Zur Verlängerung der Standzeit im Ruhezustand ohne Einschaltung des Primärkreises ist der Energiespeicher zu seiner Aufladung mit einer autonomen Energiequelle verbunden, insbesondere mit einer eine Solarzelle aufweisenden autonomen Energiequelle. Es sind aber auch andere autonome Energiequellen denkbar, z. B. thermische Stromgeneratoren oder Knacksensoren.

Die Aufgabe wird auch gelöst durch eine Schaltungsanordnung für ein Elektrogerät mit einem elektrischen Schalter zum Schalten von Netzspannung, wobei der Schalter im Ruhezustand durch eine Energie eines Energiespeicher offengehalten wird, wobei der Energiespeicher zumindest bei eingeschalteter Netzspannung, also im normalen Betrieb, aufgeladen wird.

Im Folgenden wird die Erfindung schematisch anhand eines nicht als die Erfindung beschränkend zu verstehenden Ausführungsbeispiels genauer beschrieben.

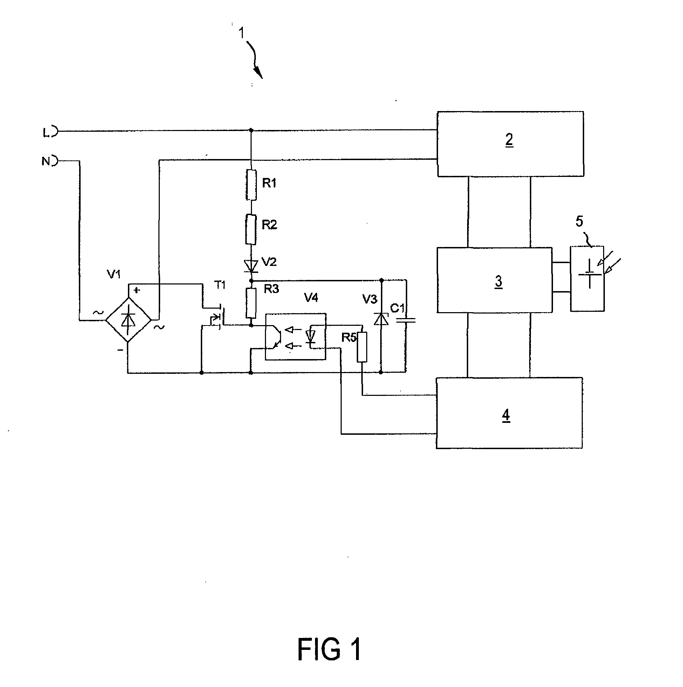

FIG 1 zeigt skizzenhaft eine Schaltungsanordnung für ein Elektrogerät.

FIG 1 zeigt eine Schaltungsanordnung 1 für ein Elektrohaushaltsgerät, z. B. eine Dunstabzugshaube, einen Herd, einen Geschirrspüler oder eine Waschmaschine, Kaffeemaschine, Klimagerät und so weiter. Bei dieser Schaltungsanordnung 1 wird ein Niederspannungsnetzteil 2, z. B. ein elektromagnetischer oder elektronischer Transformator, primärseitig durch ein Spannungsversorgungsnetz L, N gespeist. Sekundärseitig wird eine Niedervoltspannung an einen Energiespeicher 3, z. B. einen Akkumulator, angelegt, welcher wiederum eine Beschaltung in Form einer Steuereinheit 4, z. B. einen Mikrocontroller, speist. Die Steuereinheit 4 steuert auch Funktionseinheiten des Elektrogeräts.

Wenn sich das Gerät im Ruhezustand bzw. Standbybetrieb befindet, wird ein Schalter in Form eines Optokopplers V4 durch die Beschaltung 4 so angesteuert bzw. betätigt, dass der Optokoppler V4 geöffnet ist und das Netzteil 2 des Elektrogerätes primärseitig vom Spannungsversorgungsnetz L, N getrennt ist. Durch den Optokoppler V4 wird zudem die Netzspannung galvanisch von einer Steuerspannung SELV getrennt, die durch den Energiespeicher 3 bereitgestellt wird. Ein Optokoppler V4 ist typischerweise mit einem Strom < 1 mA ansteuerbar.

Genauer gesagt beträgt durch die Ansteuerung des Optokopplers V4 eine Gate-Source-Spannung eines MOSFETS TI ungefähr 0V, wodurch der MOSFET TI sperrt. Dadurch wird das Netzteil 2 primärseitig vom Spannungsversorgungsnetz L, N getrennt.

Wird der Betriebszustand des Gerätes angefordert oder ist der Puffer leer, wird der Schalter V4 nicht mehr angesteuert. Die Gate-Source-Spannung des MOSFETS TI steigt dann auf den Wert der wie gezeigt angeordneten Zenerdiode V3 an, wodurch der FET TI leitend wird. Dadurch wiederum wird die Gleichrichtervollbrücke V1 mit ihren Wechselstromeingängen und der Primärwicklung des Niederspannungsnetzteils 2 in Reihe geschaltet. Jetzt liegt Netzspannung primärseitig am Niederspannungsnetzteil 2 an, wodurch die Beschaltung 4 betriebsbereit ist und der Energiespeicher 3 wieder aus der Netzspannung bzw. der daraus gewandelten Niedervoltgleichspannung geladen werden kann. Um das Elektrohaushaltsgerät folgend in den Ruhezustand zu versetzen, wird der Schalter V4 über die Beschaltung 4 angesteuert, und zwar entweder händisch (z. B. nach händischem Einschalten in den Betriebszustand) oder automatisch durch die Beschaltung 4 (z. B. nach Aufladen des Energiespeichers 3 nach einer Entladung).

Diese Anordnung stellt auch sicher, dass bei anfangs leerem Energiespeicher 3 oder nach einer längeren Standzeit bzw. Netztrennung die Schaltungsanordnung 1 sofort betriebsbereit ist.

Optional kann der Energiespeicher 3 zusätzlich mittels einer Solarzelle 5 geladen werden. Dies reduziert die Standby-Leistungsaufnahme weiter, da der Energiespeicher 3 nur in vergleichsweise längeren Abständen nachgeladen werden muss. Vorzugsweise ist der Energiespeicher 3 so ausgelegt, dass er bei üblichem Betrieb den Schalter V4 während der gesamten Standbyzeit offen halten kann. Beispielsweise kann der Energiespeicher 3 für einen Herd oder eine Dunstabzugshaube auf eine Standzeit von 2 - 3 Tagen ausgelegt sein, innerhalb dessen das Gerät üblicherweise ordentlich eingeschaltet wird.

Die Funktion und Wirkungsweise der weiteren eingezeichneten Elemente wird dem Fachmann nach lesen der obigen Beschreibung klar sein. So ist eine Zenerdiode V3 vorgesehen, um eine Spannung am Gate G des MOSFET T1 zu begrenzen. Mittels der Diode V2 wird sichergestellt, dass nur eine gleichgerichtete Steuerspannung am MOSFET T1 anliegt. Die Gleichrichtervollbrücke V1 dient zur Polung bzw. Sicherstellung der Phasenlage des MOSFET T1.

Die gezeigte Schaltungsanordnung kann dahingehend erweitert werden, dass man diese sowohl als Energiesparschaltung (wie oben gezeigt) als auch als Dimmerschaltung auslegen kann. Insbesondere, falls das Niederspannungsnetzteil 2 als elektronischer, separierter oder integrierter Trafo ausgeführt ist, wird dessen doppelte Nutzung als Niederspannungsversorgungsquelle und als Niedervoltbeleuchtungsquelle ermöglicht. Die Beleuchtung wird dann sekundär ab- oder angeschaltet. Für die gleichzeitige Nutzung der Schaltungsanordnung als Dimmer und Energiesparschaltung wird vorzugsweise mittels des Optokopplers noch eine Feedbackschleife zur Erkennung des Nulldurchgangs und der Phasenlage eineingebaut (ohne Abb.). Des Weiteren ist vorzugsweise eine nachgeschaltete Spannungsverdopplerschaltung vorgesehen, um im gedimmten Fall eine hinreichend große Sekundärspannung (z. B. von 12 V Gleichspannung) erzeugen zu können.

Die obige Schaltungsanordnung ist nicht auf die obige Form oder Anwendung beschränkt; z. B. kann das Grundprinzip auch auf eine Horstmannschaltung übertragen werden. Die Schaltungsanordnung ist grundsätzlich auch mit Schaltnetzteilen oder anderen Elektrogeräten einsetzbar. Ferner kann beispielsweise der Optokoppler bzw. die damit zusammenhängenden Schaltelemente durch andere Schalter ersetzt werden, wie einen Diac oder Triac. Alternativ sind auch nicht galvanisch trennende Schalter einsetzbar, z. B. ein Transistor, wobei dann die Schaltungsanordnung so ausgelegt sein sollte, dass Störungen zwischen Primärseite und Sekundärseite vermieden werden.

Auch kann die Beschaltung so eingerichtet sein, dass sie den Schalter nach Erreichen eines vorbestimmten Versorgungsschwellwerts des Energiespeichers schließt, um eine Tiefentladung des Energiespeichers zu verhindern; ein solcher Schwellwert kann ein Spannungspegel des Energiespeichers sein.

### Bezugszeichenliste

- 1: Schaltungsanordnung
- 2: Netzteil
- 3: Energiespeicher
- 4: Beschaltung
- 5: autonome Energiequelle
- L: Spannungsversorgungsnetz
- N: Spannungsversorgungsnetz
- R: Widerstand
- C: Kondensator
- T1: Feldeffekttransistor
- V1: Gleichrichtervollbrücke
- V2: Diode
- V3: Zenerdiode
- V4: Schalter

## Patentansprüche

1. Elektro-Haushaltsgerät mit einer Beschaltung (4) und zumindest einem an einem Spannungsversorgungsnetz (L, N) liegenden Netzteil (2) zur Versorgung von zu steuernden Funktionseinheiten des Elektro-Haushaltsgerätes und der Beschaltung (4), wobei
- ein elektrischer Schalter (T1, V4) das Netzteil (2) des Elektrogerätes im Ruhezustand primärseitig vom Spannungsversorgungsnetz (L, N) trennt, wobei
- die Beschaltung (4) dazu vorgesehen ist, den elektrischen Schalter (V4) zu betätigen, und wobei
- das Elektrogerät einen Energiespeicher (3) aufweist,
**dadurch gekennzeichnet, dass**
- der elektrische Schalter (T1, V4) in einem angesteuerten Zustand geöffnet und in einem nicht angesteuerten Zustand geschlossen ist, wobei die Beschaltung entsprechend der Energie des Energiespeichers (3) den elektrischen Schalter (T1, V4) in Ruhezustand geöffnet hält.

2. Elektro-Haushaltsgerät nach Anspruch 1, **dadurch gekennzeichnet, dass** der Energiespeicher (3) die Beschaltung (4) speist.

3. Elektro-Haushaltsgerät nach Anspruch 1 oder 2, **dadurch gekennzeichnet, dass** die Beschaltung (4) einen Betriebszustand des Energiespeichers (3) überwacht und bei Erreichen eines vorbestimmten Versorgungsschwettwerts den elektrischen Schalter (V4) so betätigt, dass der elektrische Schalter (T1, V4) das Netzteil (2) des Elektrogerätes primärseitig mit dem Spannungsversorgungsnetz (L, N) verbindet.

4. Elektro-Haushaltsgerät nach einem der vorhergehenden Ansprüche, **dadurch gekennzeichnet, dass** der Energiespeicher (3) zur Energieaufladung mit einer autonomen Energiequelle (5) verbunden ist, insbesondere mit einer eine Solarzelle (5) aufweisenden autonomen Energiequelle.

5. Elektro-Haushaltsgerät nach einem der vorhergehenden Ansprüche, **dadurch gekennzeichnet, dass** der elektrische Schalter (T1, V4) ein Optokoppler aufweist.

6. Elektro-Haushaltsgerät nach einem der vorhergehenden Ansprüche, **dadurch gekennzeichnet, dass** das Elektro-Haushaltsgerät ein Herd ist.

7. Elektro-Haushaltsgerät nach einem der Ansprüche 1 bis 5, **dadurch gekennzeichnet, dass** das Elektro-Haushaltsgerät eine Dunstabzugshaube ist.

## Claims

1. Electrical domestic appliance comprising wiring (4) and at least one power supply unit (2) which is linked to a power supply network (L, N) used to supply functional units of the electrical domestic appliance to be controlled, and the wiring (4), wherein
- an electrical switch (T1, V4) disconnects the power supply unit (2) of the electrical domestic appliance, in the idle state, from the power supply network (L, N), on the primary side,wherein
- the wiring (4) is used to actuate the electrical switch (V4), and wherein
- the electrical appliance also comprises an energy accumulator (3),
**characterised in that**
- the electrical switch (T1, V4) is opened in an actuated state and closed in a non-actuated state, wherein the wiring keeps the electrical switch (T1, V4) open in the idle state according to the energy of the energy accumulator (3).

2. Electrical domestic appliance according to claim 1, **characterised in that** the energy accumulator (3) powers the wiring (4).

3. Electrical appliance according to claim 1 or 2, **characterised in that** the wiring (4) monitors an operating state of the energy accumulator (3) and when a predefined supply threshold is reached actuates the electrical switch (V4) such that the electrical switch (T1, V4) connects the power supply unit (2) of the electrical appliance, on the primary side, to the power supply network (L, N).

4. Electrical domestic appliance according to one of the preceding claims, **characterised in that** for charging, the energy accumulator (3) is connected to an autonomous energy source (5), in particular to an autonomous energy source comprising a solar cell (5).

5. Electrical domestic appliance according to one of the preceding claims, **characterised in that** the electrical switch (T1, V4) has an optocoupler.

6. Electrical domestic appliance according to one of the preceding claims, **characterised in that** the electrical domestic appliance is an oven.

7. Electrical domestic appliance according to one of claims 1 to 5, **characterised in that** the electrical domestic appliance is an extractor hood.

## Revendications

1. Appareil électroménager avec un câblage (4) et au moins un bloc d'alimentation (2) raccordé à un réseau d'alimentation électrique (L, N) afin d'alimenter des unités fonctionnelles de l'appareil électroménager à piloter ainsi que le câblage (4), dans lequel
- un commutateur électrique (T1, V4) sépare le bloc d'alimentation (2) de l'appareil électrique au repos côté primaire du réseau d'alimentation électrique (L, N), dans lequel
- le câblage (4) est prévu afin d'actionner le commutateur électrique (V4), et dans lequel
- l'appareil électrique présente un accumulateur d'énergie (3),
**caractérisé en ce que**
- le commutateur électrique (T1, V4) est ouvert dans un état commandé et fermé dans un état non commandé, le câblage maintenant le commutateur électrique (T1, V4) ouvert au repos en fonction de l'énergie de l'accumulateur électrique (3).

2. Appareil électroménager selon la revendication 1, **caractérisé en ce que** l'accumulateur d'énergie (3) alimente le câblage (4).

3. Appareil électroménager selon la revendication 1 ou 2, **caractérisé en ce que** le câblage (4) surveille un état d'exploitation de l'accumulateur d'énergie (3) et actionne le commutateur électrique (V4), lors de l'atteinte d'une valeur seuil d'alimentation déterminée au préalable, de telle sorte que le commutateur électrique (T1, V4) relie le bloc d'alimentation (2) de l'appareil électrique côté primaire au réseau d'alimentation électrique (L, N).

4. Appareil électroménager selon l'une des revendications précédentes, **caractérisé en ce que** l'accumulateur d'énergie (3) est relié à une source d'énergie (5) autonome pour le rechargement en énergie, en particulier à une source d'énergie autonome présentant une cellule solaire (5).

5. Appareil électroménager selon l'une des revendications précédentes, **caractérisé en ce que** le commutateur électrique (T1,V4) présente un optocoupleur.

6. Appareil électroménager selon l'une des revendications précédentes, **caractérisé en ce que** l'appareil électroménager est une cuisinière.

7. Appareil électroménager selon l'une des revendications 1 à 5, **caractérisé en ce que** l'appareil électroménager est une hotte.
